Europäisches Patentamt

European Patent Office

Office européen des brevets

(19)

(11) Publication number: **0 205 240**
**A2**

## (12) EUROPEAN PATENT APPLICATION

(21) Application number: **86302896.5**

(22) Date of filing: **17.04.86**

(51) Int. Cl.⁴: **B 26 D 7/26**
**//B26D7/01**

(30) Priority: **31.05.85 JP 116389/85**
**31.05.85 JP 116390/85**
**05.06.85 JP 122073/85**

(43) Date of publication of application:
**17.12.86 Bulletin 86/51**

(84) Designated Contracting States:
**CH DE FR GB LI NL**

(71) Applicant: **SUGANO MFG. CO., LTD.**
**1-20-21, Chuohoncho Adachi-ku**
**Tokyo(JP)**

(72) Inventor: **Suzuki, Sakae**
**636-9 Asuma-cho**
**Souka-Shi Saitama(JP)**

(74) Representative: **Cross, Rupert Edward Blount et al,**
**BOULT, WADE & TENNANT 27 Furnival Street**
**London EC4A 1PQ(GB)**

(54) Automatic punching machine for punching a laminar workpiece.

(57) An automatic punching machine, which is so constructed that a plurality of sheet-shaped works are supplied to a plurality of stations disposed therein one after another with a constant speed and desired figured plate are punched out at a predetermined station, provided with a punching pressure regulation device, a side needle control device and a device for automatically positioning works.

FIG. 1

AUTOMATIC PUNCHING MACHINE FOR PUNCHING A LAMINAR WORKPIECE

This invention relates to an automatic punching machine for sheet-shaped works used for punching figured plates for boxes from sheet-shaped works and in particular to a machine permitting to regulate punching pressure, to control side needles and to automatically position the works.

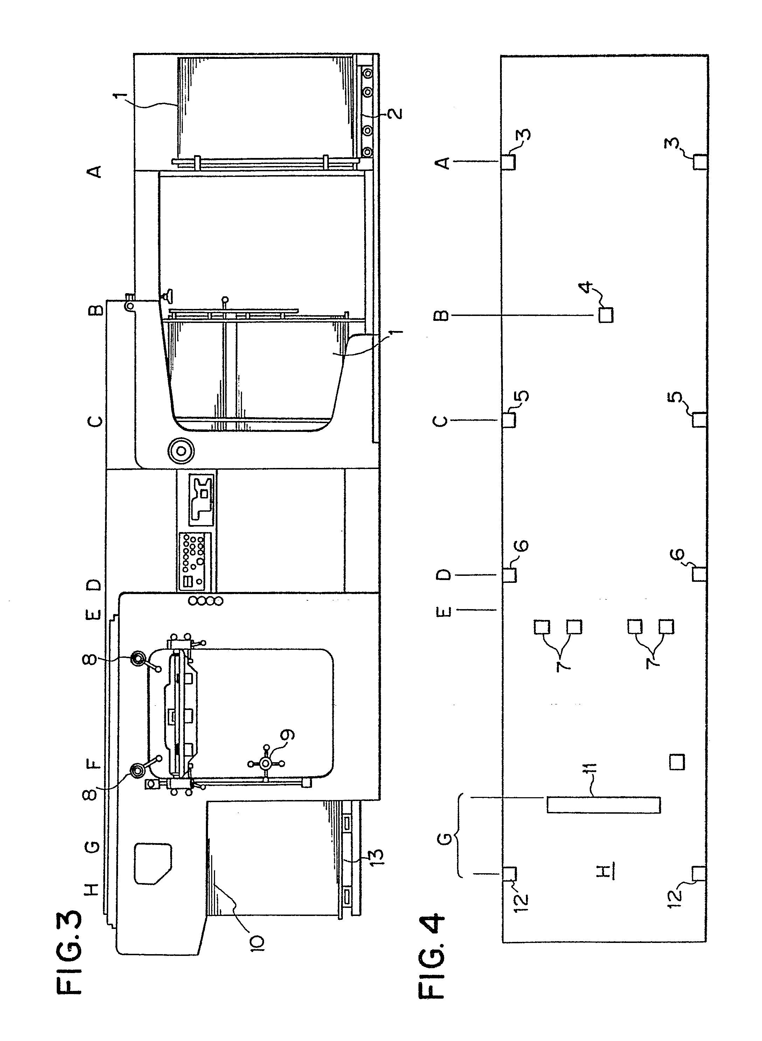

Fig. 3 is a side view illustrating an example of automatic punching machines, which are heretofore usually used, and Fig. 4 is a plan view of stations of the same automatic punching machine.

The automatic punching machine indicated in these figures has a first station A to a eighth station H.

It is so constructed that works 1 are set at first on a loading stand 2, which is sent via the first station A to the second station B. Further, the loading stand 2 is divided into 2 stages in the vertical direction, on each of which works 1 can be set, and when all the works 1 set on the upper stage are taken out at the second station B, the works 1, which have been placed on the lower station till that time, are transferred to the upper stage. The reference numaral 3 indicates a side ruler disposed for the loading stand at the first station A and 4 represents a sensor for detecting a return of a sucker to its original point disposed at the position of the second station B.

Next, at the third station C, the sucker takes out by sucking each of the works 1 one after another from the loading stand 2 and inserts it between two feeding rollers disposed in two stages, upper and lower. these feeding rollers send it to a feeding table while holding it therebetween. The reference numneral 5 indicates a side ruler disposed for the work at the station C.

Then, at the fourth station D, the work 1 is positioned in the transversal direction by means of side needles 6 disposed on both the sides of the feeding table. When the work 1 is of small bending and rigid, the side needles 6 position the work 1 by means of thrusting needles, which thrust it into a gage and when the work 1 is of large bending and soft, the side needles 6 position the work 1 by means of drawing needles, which draw it to bring it into contact with the gage. In either case the side needles 6 position the work 1 in the transversal direction so that punching is performed, keeping it away from printed portions and so forth on the work 1.

Further, at the fifth station E, the work 1 is sent by means of a brush wheel so that the front end of the work 1 is brought into contact with a plurality of front stoppers 7, which protrude at the moment of the positioning of the work 1, in order to position it in the longitudinal direction. The front stoppers 7 stated above are so constructed that each of them has a clamping nail, which seizes the work 1 to send it from the fifth station E to the sixth station F.

Next, at the sixth station F, a punching die is disposed. The punching die mentioned above consists generally of a fixed upper die and a movable lower die. The upper die is fixed by mounting an assembly composed of a chase, a wooden matrix, a blade and elastic pieces surrounding it. As the movable die, a metallic face plate is used. The fixed die and the face plate serving as the movable die described above can be set by one touch at their positions by means of handles 8 and 9, respectively. Then, at the sixth station F, at the moment where the work 1 is set on the face plate, the work 1 remaining seized by the clamping nails is pushed against the fixed die together with the face plate and thus a figured plate 10 is punched out from the work 1. The figured plate 10 thus punched out is returned on the face plate by the aforementioned elastic pieces mounted in the fixed die and lowered together at the moment of the lowering of the face plate. In this way the figured plate 10 is separated from the rest of the work 1 and sent to the seventh station G.

After that, at the seventh station G, the punched-out figured plate 10 is trued up by means of a rear arrangement device 11 and side arragement devices 12 in the longitudinal and the transversal direction, respectively, and transferred to the succeeding eighth station H.

Then, at the eighth station H, figured plates 10 thus formed are superposed on each other, trued up e.g. on a palette 13 and taken out, when a predetermined number of figured plates are accumulated.

In this case the blade of the punching die mentioned above are worn with increasing number of successive punchings. As the result, when the movable die is pushed from a position determined with respect to the fixed die, the punching pressure diminishes gradually and a predetermined number of punchings becomes impossible. Such a phenomenon has an remarkable influence, when a number of figured plates are punched out from a sheet of work, on a so-called multi-plate punching.

Therefore, heretofore, an operator has regulated manually the distance between the fixed and the movable die, taking the number of punchings into account.

Furthermore, for the side needles described above for positioning the work 1 in the transversal direction, the selection whether the side needles should be thrusting needles or drawing needles has been done by the skill of the operator before the punching of figured plates.

According to prior art techniques, as described above, since this distance between the fixed and the movable die has been regulated manually by the operator, there has been a problem that the operation has been troublesome and that attention should be paid so as to maintain the punching pressure constant.

Further, as stated above, according to the prior art techniques, since the selection whether should be used, the thrusting needles or the drawing needles, has been done by the skill of the operator, it has been a problem that a long term experience has been required for an accurate judgment therefor.

Furthermore, in the automatic punching machine described above, the work must be accurately positioned in the stations preceding the sixth station F. Heretofore this positioning has been done manually by the operator and this operation has required not only a skill but also a long time. Consequently the operation has been inefficient.

In addition, even if the regulation of the punching pressure and so forth of the automatic punching machine described above is automated by using a microcomputer, the manually effected positioning stated above of the work impairs the uniformity of the simplification of the operation and further limits the throughput of the punching, because the operation speed cannot correspond to the feeding speed of the work.

An object of this invention is to provide a device for regulating punching pressure of an automatic punching machine for sheet-shaped works permitting to resolve the above mentioned problems of the prior art techniques and to regulate automatically and accurately the punching pressure.

Another object of this invention is to provide a device for controlling side needles of an automatic punching machine for sheet-shaped works permitting to effect automatically and accurately the selection whether the side needles should be thrusting needles or drawing needles.

Still another object of this invention is to provide a device for positioning automatically the work of an automatic punching machine for sheet-shaped works.

In accordance with the present invention, an automatic punching machine for punching a laminar workpiece comprises a fixed bladed die and a movable die operable to move a workpiece against said bladed die, characterised in having means providing a record of the variation in the separation between the fixed and movable die required to compensate for wear of the bladed die with numbers of punchings and differing workpiece materials, means for counting the number of punchings performed, and means for controlling the separation between bladed die and movable die in accordance with the count and said recorded variation to control the punching pressure.

In a particular embodiment an automatic punching machine according to this invention comprises a data processing portion having a function to deduce a tendency of the distance between a fixed die and a movable die on the basis of data indicating the relation among the nature of the work, the number of punchings and the mount of wear of the blade for the punching die, in order to maintain the number of punchings and the punching pressure constant, and a function to calculate an amount of regulation for the distance between the fixed die and the movable die while comparing the real number of punchings during a punching operation with the tendency thus deduced: a counter for counting the real number of punchings during a punching operation and outputting it to said data processing portion: a control device for outputting a control signal from said data processing portion based on the amount of regulation for said distance between the fixed die and the movable die: and a punching pressure regulation portion for regulating the distance between the fixed die and the movable die, receiving the control signal described above.

In a further aspect of the invention, an automatic punching machine for punching laminar workpieces comprises light emitting and receiving means defining a light path between them, means for applying a predetermined compressive force to a workpiece to cause the workpiece to bend towards the light path in accordance with the rigidity of the workpiece material, and thrusting means for positioning the workpiece for use when the workpiece does not bend to interrupt the light path when said predetermined compressive force is applied, and drawing means for positioning the workpiece for use when the workpiece does bend to interrupt the light path when said compressive force is applied.

The automatic punching machine according to this invention comprises further a means for measuring the amount of bending of the work, which compares the value thus detected with a reference value and outputs
the result of the comparison, and a control device,
which, receiving the result of the comparison between
the detected amount of bending of the work and the
reference value from said means for measuring the amount
of bending of the work, drives a brush wheel so that the
positioning of the work is effected by thrusting needles,
when the amount of bending of the work is smaller than
the reference value, and by drawing needles, when the
amount of bending of the work is greater than the
reference value.

Still further, in order to achieve the above
objects, the automatic punching machine according to
this invention can be so constructed that at at least
two stations preceding the punching station of the
automatic punching machine described above a coarse
positioning of the sheet-shaped work and a fine positioning corresponding to a predetermined size and a
falling size of the sheet are effected with respect to
the punching die.

Hereinbelow this invention will be described
more in detail, referring to the drawing, in which:

Fig. 1 is a scheme illustrating an example of
punching dies and machines for realizing the method
according to this invention;

Fig. 2 shows diagrams illustrating examples of
patterns stored in the data processing portion before a
punching operation;

Fig. 3 is a side view illustrating an example
of automatic punching machines for sheet-shaped works
usually used;

Fig. 4 is a plan view illustrating stations of
the same automatic punching machine;

Fig. 5 is a scheme illustrating an example of
side needle control devices, which can be used in the automatic punching machine for sheet-shaped works according to this invention;

Figs. 6 (a) and (b) are schemes for explaining the principle of the means for measuring the amount of bending of a work;

Fig. 7 is a block diagram illustrating an embodiment of automatic positioning devices for the automatic punching machine for sheet-shaped works according to this invention;

Figs. 8 and 9 are schemes showing the outline of two different parts of the embodiment indicated in Fig. 7; and

Fig. 10 is a scheme for explaining the positioning operation in the embodiment stated above.

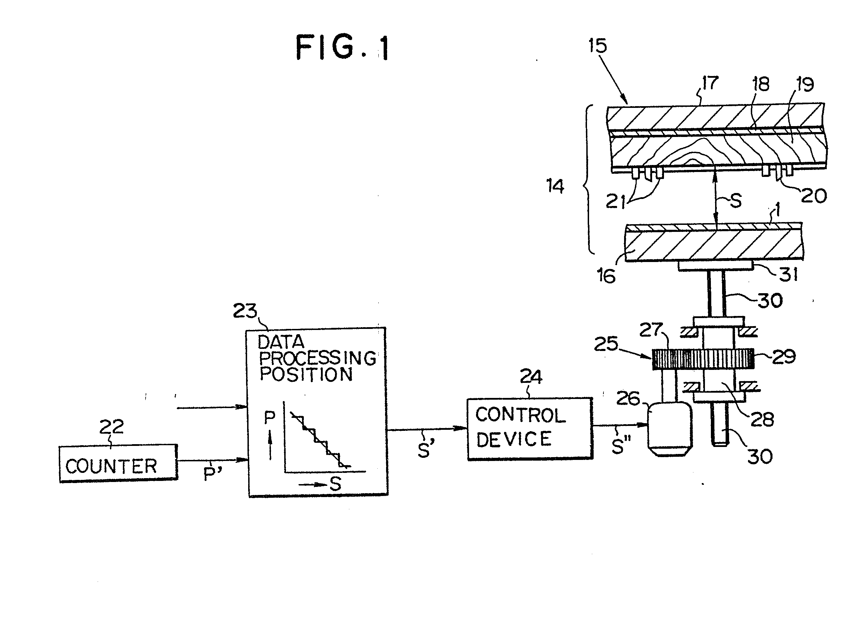

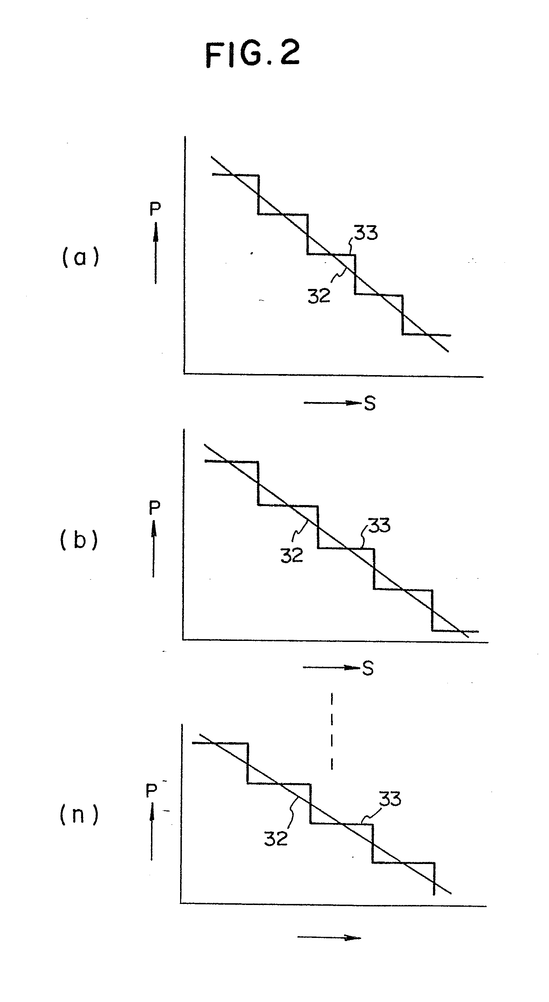

An embodiment according to this invention will be explained below, referring to Figs. 1 and 2 (a),(b), ··· ··· ··· ,(n). Fig.1 is a scheme illustrating an example of punching dies and punching pressure regulation devices for an automatic punching machine for sheet-shaped works and Figs. 2 (a), (b), ··· ··· ··· ,(n) show examples of patterns stored in the data processing portion before a punching operation.

A punching die 14 consists of a fixed die 15 and a face plate 16 serving as a movable die, as indicated in Fig. 1. The fixed die 15 is constructed by a head 17, a chase 18 inserted therein and well positioned, a wooden matrix 19 mounted in the chase 18, a blade 20 implanted in the bottom portion of this wooden matrix 19 and elastic pieces 21 made of sponge, etc. mounted around the blade and returning punched figured plates by pushing. The face plate 16 as the movable die is operated so as to be moved towards the fixed die 15 by a crank lever ( not shown in the figure ) linked with a driving source ( not shown in the figure ) and in this way it punches out figured plates from the work 1.

The punching pressure regulation device is constituted by a counter 22 for counting the number of punchings, a data processing portion 23, a control device 24 and a punching pressure regulation portion 25, as indicated in Fig. 1.

The counter 22 stated above detects a real number of punchings P' based on the number of operations of the crank lever for moving the face plate 16 and so forth, and outputs it to the data processing portion 23.

The data processing portion 23 stated above has a function to analyze the relation among the nature of the work, the number of punchings P and the amount of wear of the blade in the punching die, and to deduce a tendency of the distance S between the fixed and the movable die on the basis of the data thus obtained, in order to maintain the number of punchings P and the punching pressure constant, and a function to calculate an amount of regulation S' for the distance mentioned above between the fixed and the movable die while comparing the real number of punching P' during the punching operation. Further, in this embodiment, in the data processing portion 23 are previously stored patterns representing the relation the number of punchings P and the distance S between the fixed die 15 and the face plate 16 ( hereinbelow called " P - S pattern " ). Still further the model of a die to be mounted, which will be actually used, is inputted and also during the punching operation the number of punchings P' is inputted from the counter 22 stated above. When the model of the mounted punching die is inputted, the data processing portion 23 takes out a relevant P - S pattern among various stored P - S patterns. The data processing portion 23 is so constructed that during the punching operation it compares the actual number of punchings P' inputted from the counter 22 with the number of punchings P of the relevant P - S pattern;
reads out a distance S between the fixed die and the
face plate permitting to maintain the punching pressure
constant from the relevant pattern; calculates the
amount of regulation S' for the face plate from this
dantance S and outputs the result thus obtained to the
control device 24.

The control device 24 outputs a control signal
S" corresponding to the amount of regulation S' calculated from the relevant P - S pattern to the punching
pressure regulation portion 25.

The punching pressure regulation portion 25
comprises a motor 26, a driving gear 27 mounted on its
rotation shaft, a nut 28 rotatably supported at a
determined position, a driven gear 29 mounted on this
nut 28 and engaged with the driving gear 27, a screw
shaft 30 screw-coupled with the nut 28 described above
and a face plate receiving table 31 mounted on the upper
end portion of this screw shaft 30.  This punching
pressure regulation portion 25 is so constructed that,
when the motor 26 rotates in the forward direction by
one pitch, receiving the control signal S", the nut 28
is rotated by the driving gear 27 and the driven gear 29;
the screw shaft 30 is raised by this nut 28; the face
plate receiving table 31 is raised by one pitch; and
thus the distance S between the fixed die 15 and the
face plate 16 is regulated.  In addition, when the blade
20 of the fixed die 15 is exchanged, etc., the motor 26
is rotated in the backward direction and the face plate
receiving table 31 is returned to its original position
through the linkage of the members described above.

The P - S patterns mentioned above are prepared in the following way.

That is, experiments are effected on various
models of punching dies used in practice in order to gather experimental data indicating the relation among the nature of the work, the number of punchings and the amount of wear of the blade of the punching die, as indicated in Table 1.

| Number of punchings : unit | | number of times | | | | |
|---|---|---|---|---|---|---|
| 0 ~ 2500 | 5000 | 10000 | 30000 | 50000 | 70000 | 100000 |
| Amount of wear : unit | mm | | | | | |
| 0.025 | 0.015 | 0.025 | 0.025 | 0.04 | 0.04 | 0.05 |

where

   nature of work   corrugated cardbord 2.5 ~ 4.0 mm thick
   nature of blade     carbon tool steel JIS SK7

Then, these experimental data are inputted and analyzed in the data processing portion 23, and a tendence of the distance S between the fixed die 15 and the face plate 16 permitting to maintain the punching pressure at the moment of punching operations constant is deduced. In this way P - S patterns as indicated in Figs. 2 (a), (b), ··· ··· ···, (n) are prepared, which patterns are stored in the data processing portion 23. In Fig. 2 (a), (b), ··· ··· ···, (n), the reference numeral 32 indicates patterns illustrating the relation based on the data between the number of punchings and the distance between the fixed die and the face plate and 33 shows patterns indicating the real amount of regulation during the punching operation.

   Now a form of realization of the method according to this invention will be explained together with the working mode of the punching pressure regulation device in the embodiment described above.

   At first experimental data showing the relation among the nature of the work to be punched, the number of punchings and the amount of wear of the blade mounted on the punching die are gathered to prepare a list, as described previously.

Then, the experimental data mentioned above are inputted in the data processing portion 23 indicated in Fig. 1 and analyzed to deduce the tendency indicating the relation between the number of punchings P and the distance S between the fixed die 15 and the face plate 16 permitting to maintain the punching pressure constant. In this way P - S patterns, as indicated in Figs. 2 (a), (b),········, (n) are prepared and stored in the data processing portion 23.

After that, an assembly consisting of a chase 18, a wooden matrix 19, a blade 20 and elastic pieces 21, which are suitable to the work to be punched, is inserted and secured in the head 17 of the fixed die 15.

Finally, the model of the mounted punching die is inputted in the data processing portion 23. By using it, the data processing portion 23 takes out a P - S pattern relevant to the model of the mounted punching die among various P - S patterns.

The work 1 is set on the face plate 16 by means of the clamping nails of the work 1 and the face plate 16 is raised with respect to the fixed die 15. When a punching operation is brought into practice, the real number of punchings P' is counted on the basis of the number of operations of the crank lever displacing the face plate 16, etc. and inputted in the data processing portion 23.

The data processing portion 23 compares the real number of punchings P' inputted from the counter 22 with the number of punchings P obtained from the relevant P - S pattern and calculates the distance S between the fixed die 15 and the face plate 16 permitting to maintain the punching pressure constant on the basis of the relevant P - S pattern to output it to the control device 24.

The data processing portion 23 stated above forms a control signal S" corresponding to the above described amount of regulation S', which is outputted to the motor 26 of the punching pressure regulation portion 25.

The motor 26 of the punching pressure regulation portion 26 is rotated in the forward direction by the control signal S" and thus the nut 28 also is rotated through the driving gear 27 and the driven gear 29. Consequently the screw shaft 30 is raised and the face plate receiving table 31 is raised by one pitch. As the result the distance S between the fixed die 15 and the face plate 16 is regulated so that the punching pressure is adjusted to be constant.

The operation described above is repeated and in this way, also when a multiplate punching, e.g. 6-plate or 8-plate punching is performed, it is possible to punch out accurately figured plates from the work 1.

In the case where a worn punching die 14 should be replaced by a new one and so forth, the motor 26 in the punching pressure regulation portion 25 is continuously rotated in the backward direction by the control device 24 so that the face plate 16 is returned to its original position through the face plate receiving table 31.

In addition, according to this invention, the relation between the number of punchings P and the distance S between the fixed die and the face plate can be expressed in a digital form, with which the amount of regulation S' can be calculated by comparing the real number of punchings P' therewith in order to maintain the punching pressure constant.

Further, according to this invention, the construction of the punching die 14 and that of the punching pressure regulation portion 25 are not limited to those indicated in the figures, but any punching die and punching pressure regulation portion can be used, if they have desired functions.

Furthermore, since the automatic punching machine according to this invention comprises a data processing portion having a function to deduce a tendency of the distance between a fixed die and a movable die on the basis of data indicating the relation among the nature of the work, the number of punchings and the amount of wear of the blade for the punching die, in order to maintain the number of punchings and the punching pressure constant, and a function to calculate an amount of regulation for the distance between the fixed die and the movable die while comparing the real number of punchings during a punching operation with the tendency thus deduced; a counter for counting the real number of punchings during a punching operation and outputting it to said data processing portion; a control device for outputting a control signal from said data processing portion based on the amount of regulation for the distance between the fixed die and the movable die; and a punching pressure regulation portion for regulating the distance between the fixed die and the movable die, receiving said control signal, the method described above according to this invention can be surely realized.

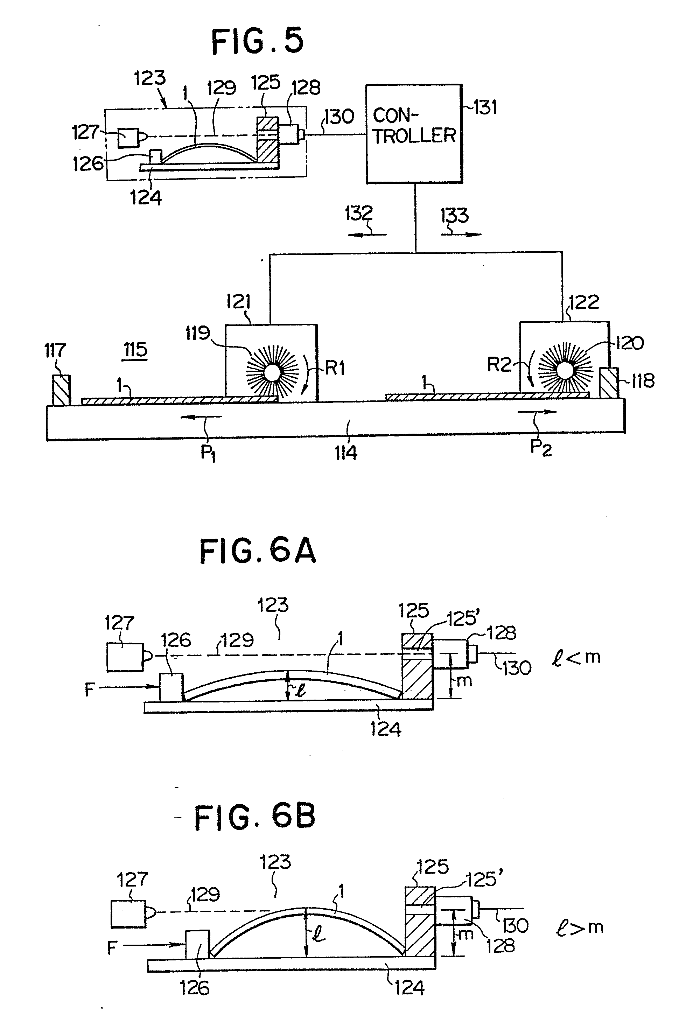

Fig. 5 is a scheme illustrating an example of side needle control devices, which can be used in the automatic punching machine for sheet-shaped works according to this invention, and Figs. 6 (a) and (b) are schemes for explaining the principle of the means for measuring the amount of bending of a work.

Each of the side needles indicated in Fig. 5 is provided with a thrusting needles 115 and a drawing needle 116 on one side of a feeding table 114 transporting works 1. The thrusting needle 115 stated above includes a gage 117, a brush wheel 119 and a driving portion 121 rotating it. The drawing needle 116 stated above also includes a gage 118, a brush wheel 120 and a driving portion 122 rotating it. Further, in the case where the work 1 has a rigidity, the work 1 is transferred by the feeding table 114 to a position separated e.g. by about 5 mm from the gage 117 of the thrusting needle 115 and the brush wheel 119 of the thrusting needle 115 is rotated in the direction indicated by an arrow $R_1$. The work 1 is thrusted by this brush wheel 119 in the direction indicated by $P_1$ and pushed against the gage 117 so as to be positioned. To the contrary, in the case where the work 1 has a softness, the work 1 is transferred by the feeding table 114 to a position separated e.g. by about 5 mm from the gage 118 of the drawing needle 116 and the brush wheel 120 of the drawing needle 116 is rotated in the direction indicated by an arrow $R_2$. The work 1 is drawn by this brush wheel 120 in the direction indicated by $P_2$ and brought into contact with the gage 118 so as to be positioned. In addition, although, in order to facilitate the comprehension, it is shown in Fig. 5 that the thrusting needle 115 and the drawing needle 116 are separated from each other, in practice the thrusting needle 115 and the drawing needle 116 are so disposed that they are close to each other in a region which is slightly wider than the largest width of the work 1 to be used.

The control device of the side needles is constructed by a means 123 for measuring the amount of bending of the work and a controller 131.

The means 123 stated above for measuring the amount of bending of the work includes a measurement table 124, a thrusting element 125 secured to one end thereof, a pusher 126 pushing the work 1 with a constant force F, a light emitting element 127 disposed on the pusher side, and a light receiving element 128 mounted on an optical path 125' formed in the thrusting element 125. The light emitting element 127 and the light receiving element 128 are located at the reference position for judging on the basis of the amount of bending 1 of the work 1 whether it is rigid or soft. The means 123 for measuring the amount of bending of the work judges that the work is rigid, when the work 1 is set on the measurement table 124 and pushed by the pusher 126 with a constant force F so that the work 1 is bent between the thrusting element 125 and the pusher 126; the light emitting element 127 emits a light beam 129 towards the light receiving element 128; and the amount of bending 1 is so small that the light beam 129 is not interrupted by the work 1, but reaches the light receiving element 128. To the contrary, if the amount of bending 1 is so large that the light beam 129 is interrupted by the work 1 and therefore it cannot reach the light receiving element 128, it is judged that the work 1 is soft. The result 130 of the comprison of the amount of bending 1 of the work 1 with the reference value m is outputted to the controller 131.

The controller 131 receives the result 130 of the comprison of the amount of bending 1 of the work 1 with the reference value m and when the amount of bending 1 is smaller than the reference value m, it sends a control signal 132 to the driving portion 121 for the brush wheel 119 of the thrusting needle 115. To the contrary, when the amount of bending 1 is greater than the reference value m, it sends a control signal 133 to the driving portion 122 for the brush wheel 120 of the drawing needle 116.

Now, an embodiment of this invention will be explained together with the function of the control device for the side needles in the embodiment described above.

At first the amount of bending 1 of the work 1, which is to be supplied to the automatic punching machine, is measured.

That is, a piece made of the same material and having the same form as the work 1, which is to be supplied to the automatic punching machine, is taken out as a sample and the work 1 is set on the measurement table 124 in the means 123 for measuring the amount of bending. Then the pusher 126 is thrusted with a constant force F so that the work 1 is bent between the thrusting element 125 and the pusher 126.

After that, the light emitting element 127 emits a light beam 129 towards the light receiving element 128, both the elements being disposed at the reference position for the judgment whether the work 1 is rigid or soft.

At this time, when the amount of bending 1 of the work 1 is smaller than the reference value m, as it can be understood from Fig. 6 (a), the light beam 129 is not interrupted by the work 1 but reaches the light receiving element 128. In this case it is judged that the work is rigid. To the contrary, when the amount of bending 1 of the work 1 is greater than the reference value m, as indicated in Fig. (b), the light beam 129 is interrupted by the work 1 and cannot reach the light receiving element 128. In this case it is judged that the work is soft. In this way it can be judged automatically and accurately whether the work 1 is rigid or soft.

The means 123 for measuring the amount of bending described above outputs the result 130 of the comprison of the amount of bending 1 of the work 1 with the reference value m to the controller 131.

The controller 131 receives the result 130 of the comparison of the amount of bending l of the work 1 with the reference value m and when the amount of bending l is smaller than the reference value m, it sends a control signal 132 to the driving portion 121 for the brush wheel 119 of the thrusting needle 115 indicated in Fig. 5 so that the brush wheel 119 of the thrusting needle 115 is rotated in the direction indicated by the arrow $R_1$; the work 1 is thrusted in the direction indicated by the arrow $P_1$ and brought into contact with the gage 117 of the thrusting needle 115 in order to position the work 1 in the longitudinal direction. To the contrary, when the amount of bending l is greater than the reference value m, it sends a control signal 133 to the driving portion 122 for the brush wheel 120 of the drawing needle 116 indicated in Fig. 5 so that the brush wheel 120 of the drawing needle 116 is rotated in the direction indicated by the arrow $R_2$; the work 1 is drawn in the direction indicated by the arrow $P_2$ and brought into contact with the gage 118 of the drawing needle 116 in order to position the work 1 in the longitudinal direction.

In this way, it is possible to make selectively the thrusting needle 115 or the drawing needle 116 function accurately, depending on the rigidity of the work 1, on the basis of the result of the comparison 130 coming from the means 123 for measuring the amount of bending described above.

Further, the means 123 for measuring the amount of bending, which can be used in the punching machine according to this invention, is not limited to the embodiment illustrated in the drawing, but any means can be used. What it essential is that it is possible to judge accurately whether the work 1 is rigid or soft, based on the amount of bending l of the sampled work 1.

According to the method of this invention, since the amount of bending is measured; when the amount of bending of the work is smaller than a reference value, the positioning of the work is performed by using the thrusting needle, and when the amount of bending of the work is greater than a reference value, the positioning of the work is performed by using the drawing needle, an effect that the selection of the thrusting and the drawing needle is effected automatically and accurately can be obtained.

Further, by using the means for measuring the amount of bending according to this invention, since it comprises a means for measuring the amount of bending of the work, which compares the value thus detected with a reference value and outputs the result of the comparison, and a control device, which, receiving the result of the comparison between the detected amount of bending of the work and the reference value from the means for measuring the amount of bending of the work, drives a brush wheel so that the positioning of the work is effected by thrusting needles, when the amount of bending of the work is smaller than the reference value, and by drawing needles, when the amount of bending of the work is greater than the reference value, the method according to this invention described above can be surely realized.

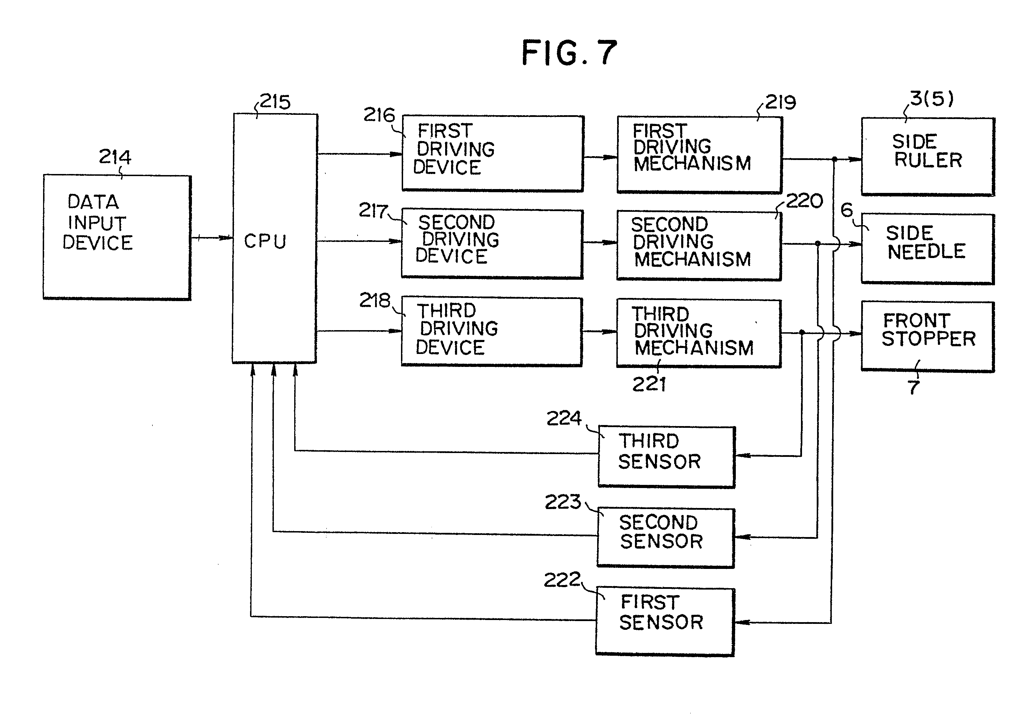

Fig. 7 is a block diagram illustrating an embodiment of automatic positioning devices for the automatic punching machine for sheet-shaped works according to this invention.

In Fig. 7, the reference numeral 214 indicates a data input device; 215 a CPU; 216 to 218 a first to a third driving device; 219 to 221 a first to a third driving mechanism; and 222 to 224 sensors for detecting the displacement.

In the data input device 214 are inputted reference values of sheet sizes a and b explained later, corresponding to the nature of the sheet-shaped work 1
and a falling size c and reference signals corresponding
to them are given to the CPU.

The first to the third driving mechanism 216
to 218 drive the side ruler 3 at the station A of the
automatic punching machine described above and the side
needles 6 and the front stoppers 7 at the stations D and
E, respectively. In addition, the first to the third
sensor 122 to 124 detect their displacements, linked
with them, and feed back their detection signals to the
CPU 215.

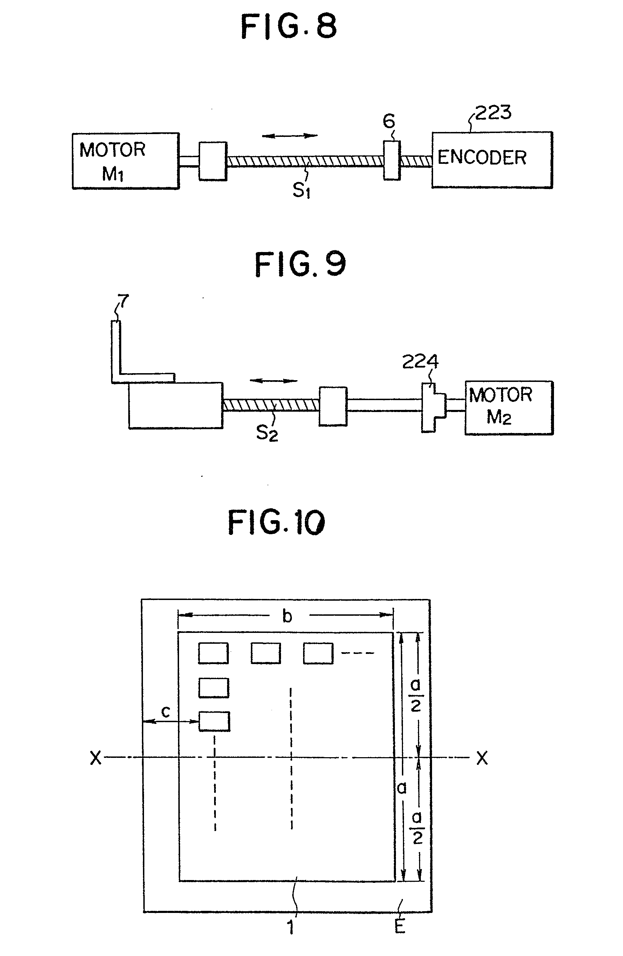

Figs. 8 and 9 are schemes illustrating the
relation among the second and the third driving mechanism 217 and 218, the side needles 6, the front stoppers
7, and the second and the third sensor 223 and 224,
respectively. Moving tables supporting the side needles
6 and the front stoppers 7 coupled with worm gears $S_1$
and $S_2$ are moved by motors $M_1$ and $M_2$ in the second and
the third driving mechanism 220 and 221, respectively.
The encoders 223 and 224 as the second and the third
sensor, respectively, are driven, linked with the moving
tables, and generate corresponding numbers of pulse
signals. Since the relation between the first driving
mechanism 219 and the side needles 3 is almost identical
to those indicated in these figures, explanation therefor will be omitted.

In this case, the sheet-shaped work 1 should
be positioned up to the fifth station E preceding the
sixth station F described above, as indicated in Fig. 10.

That is, at the fifth station E, the work 1
must be accurately positioned so that the front edge of
the work 1 is at the position exceeding the center line
X of the station by a half of the reference value of the
longitudinal sheet size and in the transversal direction
it is at the position of the reference value c of the falling size.

However, in this case, since the region of displacement for the side needles 6 and that for the front stoppers 7 are very restricted to about 10 mm and in addition it is impossible to reduce the feeding speed of the work 1, it is not possible to effect the positioning described above only at the fifth station E.

Therefore, in this embodiment, owing to the fact that for example in the first station A, the side ruler 3 is driven by the first driving mechanism 219, which side ruler 3 effects a coarse positioning of the work 1 and in the fourth and the fifth station, the final fine positioning is effected by utilizing the reference sizes mentioned above, it is possible to effect a desired positioning without lowering the feeding speed of the work 1.

Now, in the device constructed as described above in this embodiment, as soon as a reference signal coming from the data input device 214 is inputted to the CPU 215, a signal indicating an aimed amount of displacement is sent from the CPU 215 to the first drivng device 216 and the first driving mechanism 219 is energized by a driving signal corresponding to the signal indicating the aimed amount of displacement. In this way the first driving mechanism 219 drives the side ruler 3 and a displacement detection signal responding to the displacement thereof is fed back from the first sensor 222 to the CPU 215, which effect the coarse positioning stated above of the work 1.

Then, in the fourth station D and the fifth station E, a second and a third signal indicating aimed amounts of displacement are sent from the CPU 215 to the second and the third driving devices 217 and 218. In the same way as described above, the side needles 6 and the front stoppers 7 are driven by the second and the third driving mechanism 220 and 221 and thus the fine positioning described above is effected.

Further, the coarse positioning stated above can be effected also by driving the side ruler 5 in the third station C.

As explained above, according to the embodi-. ment described above, since in the automatic punching machine for sheet-shaped works, it is possible to position the work accurately and automatically before a punching operation corresponding to a determined sheet size and a falling size, and in addition, since this positioning is effected at at least two stations, divided into two stages, coarse and fine, the feeding speed of works is not lowered and the working efficiency is remarkably ameliorated.

CLAIMS

1. An automatic punching machine for punching a laminar workpiece comprising a fixed bladed die and a movable die operable to move a workpiece against said bladed die, characterised in having means providing a record of the variation in the separation between the fixed and movable die required to compensate for wear of the bladed die with number of punchings and differing workpiece materials, means for counting the number of punchings performed, and means for controlling the separation between bladed die and movable die in accordance with the count and said recorded variation to control the punching pressure.

2. An automatic punching machine for punching laminar workpieces comprising light emitting and receiving means defining a light path between them, means for applying a predetermined compressive force to a workpiece to cause the workpiece to bend towards the light path in accordance with the rigidity of the workpiece material, and thrusting means for positioning the workpiece for use when the workpiece does not bend to interrupt the light path when said predetermined compressive force is applied, and drawing means for positioning the workpiece for use when the workpiece does bend to interrupt the light path when said compressive force is applied.

3. An automatic punching machine for sheet-shaped works comprising:

(i) a data processing portion having a function to deduce a tendency of the distance between a fixed die and a movable die on the basis of data indicating the relation among the nature of the work, the number of punchings and the amount of wear of the blade for the punching die, in order to maintain the number of punchings and the punching pressure constant, and a function to calculate an amount of regulation for said distance between the fixed die and the movable die while comparing the real number of punchings during a punching operation with the tendency thus deduced:

(ii) a counter for counting the real number of punchings during punching operation and outputting it to said data processing portion:

(iii) a control device for outputting a control signal from said data processing portion based on the amount of regulation for said distance between the fixed die and the movable die: and

(iv) a punching pressure regulation portion for regulating the distance between the fixed die and the movable die, receiving said control signal.

4. An automatic punching machine for sheet-shaped works according to Claim 3, further comprising a means for measuring the amount of bending of the work, which compares the value thus detected with a reference value and outputs the result of the comparison, and a control device, which, receiving the result of the comparison between the detected amount of bending of the work and the reference value from said means for measuring the amount of bending of the work, drives a brush wheel so that the positioning of the work is effected by thrusting needles, when the amount of bending of the work is smaller than the reference value, and by drawing needles, when the amount of bending of the work is greater than the reference value.

5. In an automatic punching machine, which is so constructed that a plurality of sheet-shaped works are supplied to a plurality of stations disposed therein one after another with a constant speed and desired figured plate are punched out at a predetermined station, the improvement wherein a first means for effecting a coarse positioning of the sheet-shaped work and a second means for effecting a fine positioning with respect to the punching die, corresponding to a predetermined size and a falling size of the sheet at least two stations preceding the punching station.

6. An automatic punching machine for sheet-shaped works according to Claim 5, wherein said first means includes a driving mechanism for driving a side ruler at the first or third station and a sensor for detecting the amount or displacement of said side ruler, and said second means includes a driving mechanism for driving side needles and front stoppers and sensors for detecting the amount of their displacement.

# FIG.1

# FIG. 2

(a)

(b)

(n)

# FIG.3

# FIG.4

0205240

## FIG.5

## FIG.6A

$\ell < m$

## FIG.6B

$\ell > m$

# FIG. 7

214 DATA INPUT DEVICE → 215 CPU

216 FIRST DRIVING DEVICE → 219 FIRST DRIVING MECHANISM → 3(5) SIDE RULER

217 SECOND DRIVING DEVICE → 220 SECOND DRIVING MECHANISM → 6 SIDE NEEDLE

218 THIRD DRIVING DEVICE → THIRD DRIVING MECHANISM 221 → FRONT STOPPER 7

224 THIRD SENSOR

223 SECOND SENSOR

222 FIRST SENSOR

0205240

0205240

## FIG. 8

## FIG. 9

## FIG. 10